# EUROPÄISCHE PATENTANMELDUNG

(11) **EP 1 870 673 A2**
(43) Veröffentlichungstag der Anmeldung: **26.12.2007**
(21) Anmeldenummer: 07107922.2
(22) Anmeldetag: 10.05.2007
(51) Int. Cl.: G01C 21/36, G08G 1/0969

(54) **Verfahren zur Darstellung von in Navigationssystemen angezeigten Objekten und entsprechende Navigationseinrichtung**

(30) Priorität: 19.06.2006 DE 102006028011
(71) Anmelder: ROBERT BOSCH GMBH, 70442 Stuttgart (DE)
(72) Erfinder: Kynast, Andreas, 70176, Stuttgart (DE); Faenger, Jens, Palo Alto, CA 94304 (US)

(57) **Zusammenfassung**

Die Erfindung betrifft ein Verfahren zur Darstellung von in Navigationssystemen angezeigten dreidimensionalen Objekten, die in der Umgebung einer Fahrtroute eines Fahrzeuges angeordnet sind, wobei die Gestaltung der einzelnen Objekte für die Darstellung in Abhängigkeit von mindestens einem fahrer-, fahrzeug- und/oder verkehrsbezogenen Eingangsfaktor erfolgt. Die Erfindung betrifft auch eine Navigationseinrichtung mit einer Anzeigeeinheit und einer Steuereinheit zur Durchführung des Verfahrens.

## Beschreibung

Die Erfindung betrifft ein Verfahren zur Darstellung von in Navigationssysteme angezeigten dreidimensionalen Objekten, die in der Umgebung einer Fahrtroute eines Fahrzeuges angeordnet sind. Die Erfindung betrifft auch eine Navigationseinrichtung zur Durchführung des Verfahrens.

### Stand der Technik

Aus der DE 102 28 703 A1 ist ein Verfahren zum Betreiben von Fahrerinformationssystemen in einem Kraftfahrzeug bekannt, bei dem die an den Fahrer auszugebenden Informationen in Abhängigkeit von Fahrzeugbetriebsdaten gewählt werden. Dabei werden je nach Belastung des Fahrers, die ebenfalls in Abhängigkeit der Fahrzeugbetriebsdaten ermittelt werden kann, die auszugebenden Informationen gefiltert, um z. B. bei schwierigen Verkehrssituationen den Fahrer nicht mit unnötigen Informationen über den Fahrzeugzustand zusätzlich zu belasten.

Aus der EP 1 508 780 A1 wird eine Navigationsvorrichtung zur Führung eines Fahrzeuges vorgeschlagen, bei der in einer Anzeigeeinheit an die Fahrtroute angrenzende Objekte gegenüber den übrigen Objekten in der Fahrzeugumgebung hervorgehoben dargestellt werden. So können die für die Navigation des Fahrers wichtigen Objekte in der nahen Umgebung der Fahrtroute hervorgehoben dargestellt werden, um die Orientierung des Fahrers zu erleichtern. Die Hervorhebung kann dabei durch farbliche und/oder kontrastmäßige Änderungen der Objekte erfolgen.

Dabei ist es üblich, dass die an die Fahrtroute angrenzenden Objekte dreidimensional dargestellt werden, wobei die Ansicht auf die Fahrtroute aus der Vogelperspektive erfolgt. Die Darstellung der Objekte ist dabei standardisiert, d. h. die Objekte werden unabhängig von auf den Fahrer bzw. auf das Fahrzeug einwirkenden Faktoren immer gleich dargestellt. Bei modernen Navigationssystemen wird versucht, die Darstellung der Objekte detailgetreu nachzubilden, um dem Fahrer eine größtmögliche Orientierungshilfe an die Hand zu geben. Nachteilig dabei ist, dass in schwierigen Situationen, die dem Fahrer eine erhöhte Konzentration abverlangen, der Fahrer durch zu viele Details in der Navigationsansicht abgelenkt wird. Dies kann zu einer Gefährdung anderer Verkehrsteilnehmer führen.

### Aufgabe der Erfindung

Aufgabe der Erfindung ist es daher, ein verbessertes Verfahren zur Darstellung von in einem Navigationssystem angezeigten Objekten anzugeben.

Die Aufgabe wird mit dem Verfahren der eingangs genannten Art erfindungsgemäß dadurch gelöst, dass Gestaltung der einzelnen Objekte für die Darstellung in Abhängigkeit von mindestens einem fahrer-, fahrzeug- und/oder verkehrsbezogenen Eingangsfaktor erfolgt. Die Aufgabe der Erfindung wird auch mit einer Navigationseinrichtung zur Durchführung des Verfahrens gelöst.

In der Anzeigeeinheit des Navigationssystems werden die Objekte dabei in Abhängigkeit verschiedener Eingangsfaktoren dargestellt. Ändert sich einer der Eingangsfaktoren, so wird die entsprechende Gestaltung der Objekte für die Darstellung an den geänderten Eingangsfaktor angepasst. So werden z. B. in schwierigen Verkehrssituationen die Objekte mit weniger Details dargestellt, um den Fahrer nicht unnötig abzulenken.

So ist es z. B. vorteilhaft, wenn die Gestaltung der Objekte in Abhängigkeit der Geschwindigkeit eines Fahrzeuges erfolgt. Erhöht sich die Geschwindigkeit über einen bestimmten Grenzwert hinaus, so wird dem Fahrer wesentlich mehr Konzentration abverlangt. In diesem Fall kann die Gestaltung der Objekte z. B. dahingehend vereinfacht werden, dass unnötige Details der Objekte weggelassen werden. Es ist aber auch denkbar, in Abhängigkeit der Belastung des Fahrers die Objekte darzustellen. Dazu wird von an dem Fahrzeug angebrachten Sensoren der momentane Zustand des Fahrzeugs ermittelt, wie z. B. Abblendlicht, Fernlicht, Nebelscheinwerfer, aber auch die Scheibenwischerfrequenz oder die Häufigkeit des Abbremsens und des Beschleunigens, der mit der Belastung des Fahrers korreliert. Ist die Belastung des Fahrers sehr hoch, so wird eine möglichst einfache Gestaltung der Objekte gewählt, um die gesamte Darstellung zu vereinfachen. Wird dagegen die Belastung von dem System eher niedrig eingeschätzt, so kann die Gestaltung der Objekte dementsprechend angepasst werden. Dabei ist es besonders vorteilhaft, wenn als Eingangsfaktor neben der Belastung des Fahrers auch die momentane Verkehrssituation in die Berechnung mit einfließt. Um die Gestaltung der einzelnen Objekte für die Darstellung zu verändern, kann z. B. der Detaillierungsgrad verändert werden. Beispielsweise wird in einer schwierigen Verkehrssituation ein Haus nur noch als Quader angezeigt, während in normalen Verkehrssituationen bzw. bei geringerer Belastung des Fahrers das Haus mit Fenstern, Türen und Balkon dargestellt wird. Es ist aber auch denkbar, dass in einer schwierigen Situation alle Objekte eines bestimmten Typs, z.B. alle Gebäude eines gleichen Typs wie z.B. Kirchen oder ähnlichem, in der Ansicht gleich dargestellt werden.

Weiterhin ist es vorteilhaft, wenn bei der Gestaltung der Objekte in Abhängigkeit der Eingangsfaktoren die Farbe berücksichtigt wird. So werden z. B. bei einer erhöhten Belastung des Fahrers alle Objekte in der gleichen Farbe dargestellt, während sie sonst in verschiedenen Farben dargestellt werden. Durch die farblich einheitliche Gestaltung wird die Orientierung des Fahrers auf der Anzeigeeinheit erleichtert, wodurch lange Blickabwendungen von der Straße vermieden werden. Denkbar ist aber auch, dass bei der Darstellung der Objekte die Kontraste derart verändert werden, dass zur Routenführung hilfreiche, fahrrelevante Objekte gegenüber nicht fahrrelevanten Objekten hervorgehoben dargestellt werden, um unwesentliche Merkmale aus der Anzeige herauszufiltern.

Besonders vorteilhaft ist es, wenn die Höhe der einzelnen Objekte bei einer dreidimensionalen bzw. perspektivischen Anzeige an die Eingangsfaktoren angepasst wird. So kann bei schwierigen Situationen die Höhe der Objekte reduziert werden, um die Darstellung zu vereinfachen. Im Extremfall werden sogar nur noch die Gebäudegrundrisse dargestellt.

Des Weiteren ist es besonders vorteilhaft, wenn neben der Reduzierung der Höhe der Objekte auch die Anzahl der dargestellten Objekte bei einer schwierigen Situation reduziert werden. So können beispielsweise alle Wohngebäude weggelassen werden, während die öffentlichen Gebäude noch dargestellt werden. Auch hier ist das Ziel, die Darstellung zu vereinfachen, um den Fahrer nicht unnötig abzulenken und geringere Blickabwendungszeiten für den Fahrer durch Reduzierung und Vereinfachung zu ermöglichen. Dadurch kann die Fahrsicherheit erhöht werden, so dass der Fahrer sich in kritischen Situationen verstärkt auf die eigentliche Fahraufgabe konzentrieren kann und nicht abgelenkt wird.

Ganz besonders vorteilhaft ist es, wenn die Darstellung der Objekte von dem Fahrer manuell eingestellt werden kann. Dabei kann der Fahrer selber entscheiden, wie detailgetreu die Darstellung der Fahrtroute und der die Fahrtroute umgebenden Objekte erfolgen soll.

Weiterhin betrifft die Erfindung auch eine Navigationseinrichtung mit einer Anzeigeeinheit und einer Steuereinheit zur Durchführung des oben beschriebenen Verfahrens. Dabei ist es vorteilhaft, wenn die Navigationseinrichtung zum Detektieren der Belastung des Fahrers bzw. zum Detektieren der momentanen Verkehrssituation, insbesondere der Verkehrsdichte, eingerichtet ist. Dies kann z. B. dadurch geschehen, dass die Navigationseinrichtung mit in einem Fahrzeug befindlichen Sensoren verbunden wird.

### Zeichnungen

Die Erfindung wird anhand der nachfolgenden Zeichnungen näher erläutert.
Es zeigen:
- Figur 1: Blockdiagramm einer Navigationseinrichtung;
- Figur 2a: Darstellung von 3-D-Objekten mit hohen Detaillierungsgrad;
- Figur 2b: Darstellung von 3-D-Objekten mit geringem Detaillierungsgrad bei kritischen Situationen;
- Figur 3a: Darstellung einer Fahrtroute mit Objekten und Höheninformationen bei normalen Situationen;
- Figur 3b: Darstellung einer Fahrtroute mit Objekten ohne Höheninformation (Grundriss) bei schwierigen Situationen;
- Figur 3c: Darstellung einer Fahrtroute ohne Objekte bei kritischen Situationen.

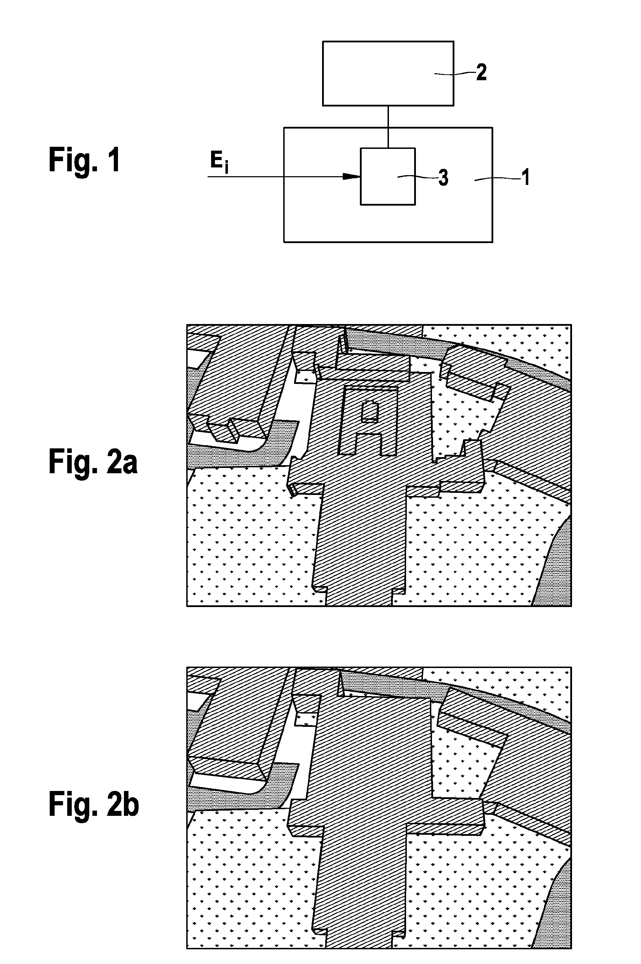

Die Figur 1 lässt ein Blockdiagramm einer Navigationseinrichtung 1 mit Anzeigeeinheit 2 erkennen. Die Navigationseinrichtung 1 hat eine Steuereinheit 3 zur Routenführung in an sich bekannter Weise und Ansteuerung der Anzeigeeinheit 2. Auf der Anzeigeeinheit 2 dargestellte dreidimensionale Objekte werden von der Steuereinheit 3 so aufbereitet, dass die Gestaltung der einzelnen Objekte in Abhängigkeit von der Steuereinheit 3 zugeführten Eingangsfaktoren Eᵢ, (mit i= O... N und N= Anzahl der berücksichtigten Eingangsfaktoren) erfolgt.

In Figur 2a ist ein Gebäudeobjekt zu erkennen, welches einen hohen Detaillierungsgrad aufweist. Dabei werden alle in dem Navigationsgerät abgespeicherten Gebäudeinformationen zur Gestaltung des Objektes verwendet, so dass eine möglichst realistische Abbildung der realen Umgebung erreicht wird. Dabei ermöglicht ein hoher Detaillierungsgrad der Objekte dem Fahrer eine verbesserte Orientierung. Solche detailgetreuen Gestaltungen sind jedoch nur in normalen Verkehrssituationen sinnvoll, da der Fahrer sonst zu sehr von den teils unnötigen Details abgelenkt wird und sich so schwieriger auf die eigentliche Verkehrssituation konzentrieren kann.

Daher wird, wie in Figur 2b zu erkennen ist, bei schwierigen oder kritischen Situationen der Detaillierungsgrad herabgesenkt, so dass nur noch wesentliche Merkmale bzw. Eigenschaften von den Objekten dargestellt werden. Bei einer solchen Gestaltung der Objekte werden in schwierigen Situationen dem Fahrer trotzdem noch genügend Orientierungshilfen gegeben, ohne dass er durch unwesentliche Details abgelenkt wird.

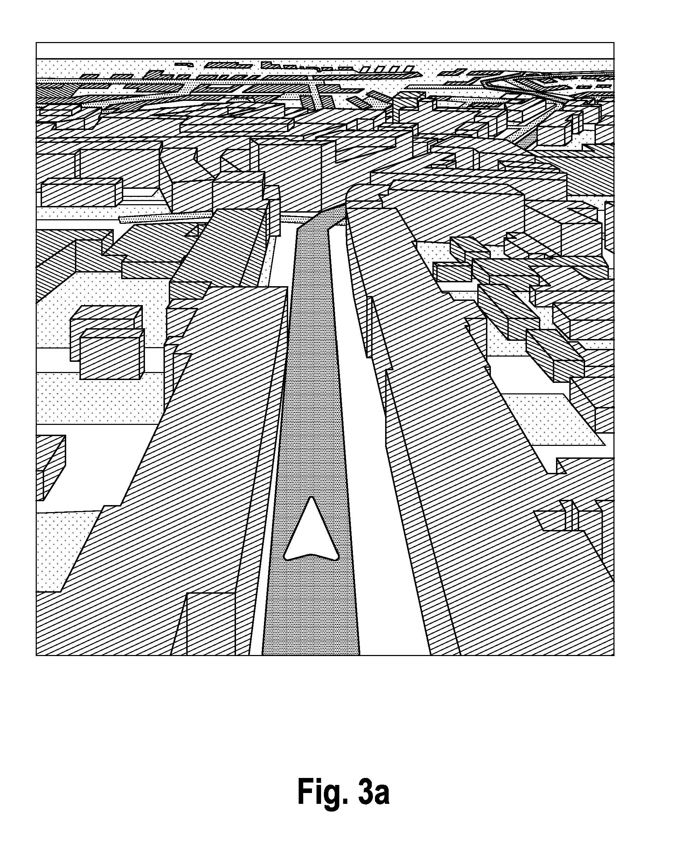

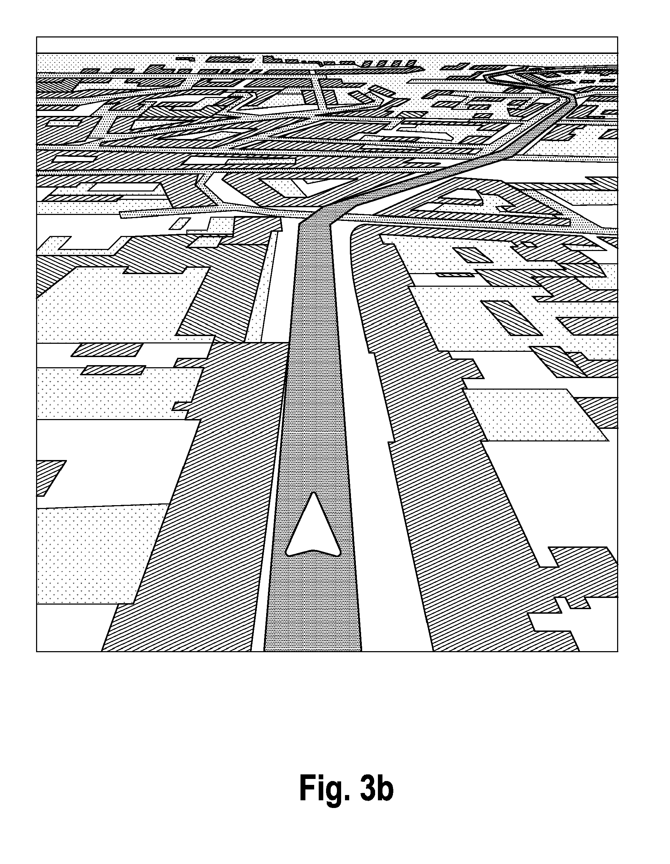

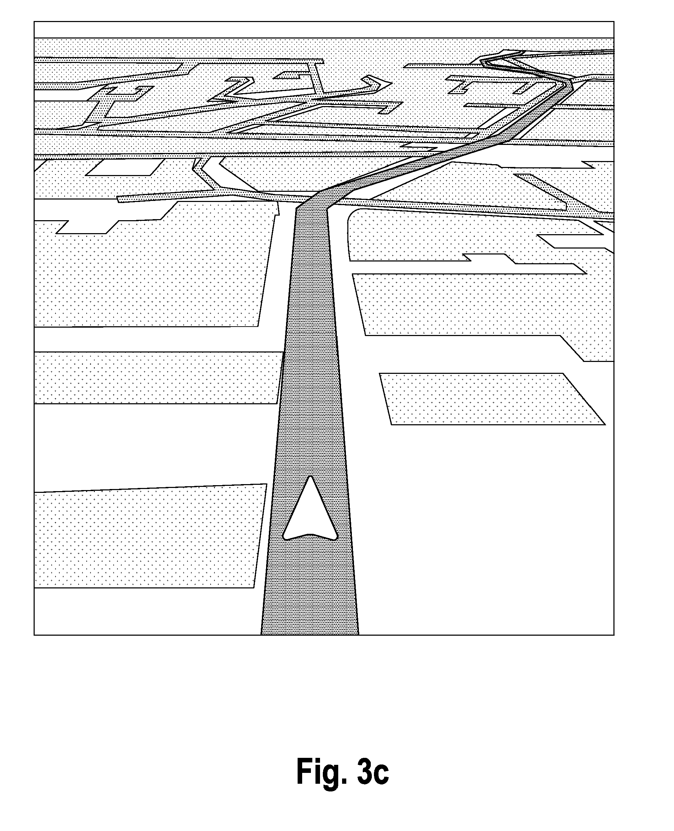

In den Figuren 3a, 3b und 3c ist jeweils eine Darstellung einer Fahrtroute zu erkennen, wobei die die Fahrtroute umgebenden Objekte an die Verkehrssituation angepasst wurden. In Figur 3a ist eine Fahrtroute zu erkennen, in deren Umgebung dreidimensionale Objekte dargestellt sind. Es handelt sich dabei um eine Darstellung während einer normalen Verkehrsituation, die dem Fahrer keine erhöhte Konzentration abverlangt. Dementsprechend kann die Darstellung der Objekte detailgetreuer gewählt werden, um eine bestmögliche Orientierungshilfe zu geben.

In Figur 3b ist eine Darstellung derselben Fahrtroute wie in Figur 3a zu erkennen, wobei die an die Fahrtroute angrenzenden Objekte an eine schwierige Verkehrssituation angepasst wurden. Dabei erfolgt die Anpassung derart, dass aus den dreidimensionalen Objekten die Höheninformation entfernt wurden, so dass die Objekte nur noch als Grundrisse dargestellt werden. Dies ermöglicht dem Fahrer immer noch eine gute Orientierung, wobei er jedoch nicht durch unnötige Details der Darstellung abgelenkt wird und sich so besser auf die schwierige Verkehrssituation konzentrieren kann.

In Figur 3c ist dieselbe Fahrtroute wie in den vorangegangenen Figuren 3a und 3b zu erkennen, wobei die Verkehrssituation in diesem Fall derart kritisch ist, dass sie vom Fahrer die volle Aufmerksamkeit fordert. Um unnötige Ablenkungen und Blickabwendungszeiten zu vermeiden, wurden alle für die Routenführung nicht notwendigen Objekte aus der Darstellung entfernt. Nur die für die Fahrtroute wesentlichen Merkmale sind in der Darstellung noch zu erkennen. Dies ermöglicht dem Fahrer eine auf die wesentlichen Merkmale beschränkte Orientierung, ohne dass er zu lange den Blick von der Straße nehmen muss. Dies erhöht gerade im dichten Stadtverkehr die Verkehrssicherheit bei der in der Regel die volle Konzentration des Fahrers gefordert wird.

## Patentansprüche

1. Verfahren zur Darstellung von in Navigationssystemen angezeigten dreidimensionalen Objekten, die in der Umgebung einer Fahrtroute eines Fahrzeuges angeordnet sind, **dadurch gekennzeichnet, dass** die Gestaltung der einzelnen Objekte für die Darstellung in Abhängigkeit von mindestens einem fahrer-, fahrzeug- und/oder verkehrsbezogenen Eingangsfaktor erfolgt.

2. Verfahren nach Anspruch 1, **dadurch gekennzeichnet, dass** mindestens einer der Eingangsfaktoren die Geschwindigkeit des Fahrzeugs, die Belastung des Fahrers und/oder die momentane Verkehrssituation, insbesondere die Verkehrsdichte, darstellt.

3. Verfahren nach Anspruch 1 oder 2, **gekennzeichnet durch** Auswählen des Detaillierungsgrades für die Darstellung der Objekte in Abhängigkeit mindestens eines Eingangsfaktors.

4. Verfahren nach einem der vorhergehenden Ansprüche, **gekennzeichnet durch** Auswählen der Objekthöhe, des Kontrastes und/oder der Farbe für die Darstellung der Objekte in Abhängigkeit mindestens eines Eingangsfaktors.

5. Verfahren nach einem der vorhergehenden Ansprüche, **gekennzeichnet durch** Entfernen mindestens eines der Objekte in Abhängigkeit mindestens eines Eingangsfaktors aus der Darstellung.

6. Verfahren nach einem der vorhergehenden Ansprüche, **gekennzeichnet durch** Ändern der Darstellung der Objekte in Abhängigkeit des geänderten Eingangsfaktors nach einer Änderung mindestens eines Eingangsfaktors

7. Verfahren nach Anspruch 6, **dadurch gekennzeichnet, dass** die Änderung der Darstellung nach einer zeitlichen Verzögerung erfolgt, wenn während der Dauer der Verzögerung die Änderung mindestens eines Eingangsfaktors vorlag.

8. Navigationseinrichtung mit einer Anzeigeeinheit und einer Steuereinheit zur Durchführung des Verfahrens nach einem der vorhergehenden Ansprüche.

9. Navigationseinrichtung nach Anspruch 8, **dadurch gekennzeichnet, dass** die Navigationseinrichtung zum Detektieren der Geschwindigkeit des Fahrzeugs, der Belastung des Fahrers und/oder der momentanen Verkehrssituation, insbesondere der Verkehrsdichte, eingerichtet ist.
